# EUROPEAN PATENT SPECIFICATION

(11) **EP 1 549 775 B1**
(45) Date of publication and mention of the grant of the patent: **10.10.2012**
(21) Application number: 03771987.9
(22) Date of filing: 25.07.2003
(51) Int. Cl.: C14C 9/00

(54) **DURABLE ANTIMICROBIAL LEATHER**
PERMANENT ANTIMIKROBIELLES LEDER
CUIR ANTIMICROBIEN DURABLE

(30) Priority: 26.07.2002 US 398922 P
(43) Date of publication of application: 06.07.2005
(73) Proprietor: MICROBAN PRODUCTS COMPANY, Huntersville, NC 28078 (US)
(72) Inventor: PAYNE, Stephen, A., Leland, North Carolina 28451 (US)
(74) Representative: Hayes, Adrian Chetwynd
(86) International application number: PCT/US2003/023568
(87) International publication number: WO 2004/011682

(56) References cited:
- GB-A- 770 966
- US-A- 6 110 950
- US-A1- 2002 066 879

## Description

### FIELD OF THE INVENTION

The invention relates generally to processes for fabricating leather having antimicrobial properties, and more particularly to leather having antimicrobial properties where the antimicrobial properties are durable or an intrinsic part of leather.

### BACKGROUND OF THE INVENTION

Originally, leathers and skins were tanned with vegetable extracts and quite often with extracts from trees such as the oak and chestnut. These tanning agents were known for having antiseptic properties.

Typically, leathers were tanned with an excess of these tanning agents. The leathers would take up a considerable quantity of these agents and later exude them when combined with perspiration or other sources of moisture. The antiseptic function of these agents within the leather was thus indirectly transmitted to the skin and reduced the colonization of bacteria, fungi and other microscopic organisms.

Natural vegetative tanning agents have largely been supplanted in more modem tanning processes. Mineral agents are now widely used in mass tanning processes due to their lower cost and their ability to produce leathers and hides having desirable and uniform properties. One drawback to using mineral tanning agents appears to be an associated increase in the development of microbial colonization of leather goods. Such colonization reduces the useful life of the goods through damage to structural integrity (e.g., rot) and staining among other problems.

Human fungal infections (i.e., mycosis) and other skin diseases have been linked to fungal colonization of leather shoes. This problem is of particular concern to the military. As is somewhat intuitive, studies have shown that once a leather article, such as a shoe, becomes infected with microbes the leather becomes a natural vehicle for transmission of infection or re-infection. It should be noted, however, that such infections are not limited to mineral tanned leathers but have also occurred where vegetative tanning agents have been used.

Accordingly, researchers have long sought methods for preventing microbial colonization of leather goods and the occurrence and transmission of microbial infections via leather goods.

The first efforts in this regard primarily employed the topical application of antimicrobial agents to leather hides either before the tanning process or after the tanning process. In very general terms, as leather is manufactured, it goes through three stages. In the first stage the hide is treated to remove hair. The second stage is the wet manufacturing stage where the hides are cleaned, scoured, dyed and usually waterproofed. The last stage is dry finishing in which the leather is stretched to almost double its size, the leather is split in half and various finishes are applied to the smooth surface for aesthetics.

Currently the majority of leather is treated with antimicrobial agents in the first stage and in the last stage. The wet hide is treated to prevent spoilage during shipping and storage, but the treatment is not durable and does not survive the tanning process to impart permanent antimicrobial properties to the finished leather. In the last stage the antimicrobial agents are spray applied to the outside surface of the leather and dried. This application technique enables leather manufacturers to pass a stringent soil burial fungal test developed by the military, but the antimicrobial agents are not durable to washing or to other water contact. As the leather is used, and most notably exposed to rain and water, the antimicrobial agent washes away and the leather loses its antimicrobial properties.

US 2002/0066879 discloses a composition comprising phenolic active compounds and fungicidal active compounds and using such a composition to preserve animal hides and leather. US 6110950 discloses a microbicidal composition comprising propiconazole and 2-mercaptobenzothiazole or an alkali metal salt thereof. It discloses that the composition may be used during all process stages in the tanning process and exemplifies the treatment of pre-pickled hides with, in order, water and sodium chloride, formic acid, sulphuric acid, chromosal B, propiconazole and 2-mercaptobenzothiazole, Baychrome and then sodium bicarbonate after which the leather is washed.

Accordingly, what is needed is durable antimicrobial leather, which remains resistant to bacteria, fungi, mold and mildew long after the finishing process. The antimicrobial agents should be available throughout the leather, inside and on the surface to thoroughly protect the leather from stain and odor causing microbes, including bacteria and fungi.

### DESCRIPTION OF THE INVENTION

As used herein the term antimicrobial agent is used to encompass materials, typically chemicals that kill microbes or retard the growth of microbes to a commercially acceptable degree. The term antimicrobial agent should be understood to include bactericides and fungicides and other such agents. This detailed description uses the terms antimicrobial, bactericide and fungicide and those skilled in the art will be able to discern the appropriate meaning of each term by its context.

The invention is a method for the aqueous treatment of leather goods to impart durable antimicrobial characteristics. As used herein the term aqueous means that the method according to the invention applies antimicrobial agents during the wet portion of the tanning process. Some references refer to this as "in-situ" application. In other words, the antimicrobial composition is applied during the soaking baths that are part of the tanning process. This type of application should be contrasted to the more common method of spray applying antimicrobial agents on the surface of the leather goods at the very beginning or at the end of the tanning process. Accordingly the present invention provides a method for aqueous treatment of leather to impart durable antimicrobial characteristics, the method comprising the steps of:
cleaning the leather,
a first soaking of the leather in an antimicrobial compositions optionally in the presence of a lipophilic emulsifier wherein the antimicrobial compositions comprises a bactericide and a fungicide and wherein the fungicide and bactericide are present in the composition in a ratio between 1:50 to 10:1 fungicide to bactericide,
soaking the leather in an aqueous solution containing a tanning agent, and rinsing the leather.
The paragraphs that follow provide more detail regarding each embodiment of the invention using the method embodiment as a framework for the overall discussion.

As an initial matter, it should be understood that no two tanneries are identical; each has its unique characteristics and subprocesses. Some perform only some of the steps in the overall process and transfer the leather to other tanneries to complete the process. Accordingly, this detailed description contains a general overview of a typical process. Those skilled in the art are fully capable of taking the teachings of this invention and modifying them for application in any particular process. Detailed examples for a particular process are provided at the end of the discussion to further aid in the explanation of the invention.

In a typical process, the leather, as a blue hide, is first cleaned and scoured to remove fat using a solution of metal salts of various acids.
Exemplary acids include acetic acid, carbonic acid, formic acid and sulfurous acid. This solution is often neutralized to a pH of about 7. The leather is then soaked and washed one or more times. Typically a wetting agent is added to the wash.

The leather goods are then soaked in an antimicrobial composition comprising a bactericide and a fungicide. Preferably the bactericide and fungicide composition is mixed with a lipophilic emulsifying agent such as the sodium salt of oleoylsarcosine in water. Sarcosine is a common name for N-methylamino acetic acid (aka N-methylglycine), a proteinaceous acid. This initial soaking can be the only soaking or it can be the first of several soakings. For descriptive purposes this soaking will be referred to as the first soaking.

In preferred embodiments the antimicrobial composition comprises a fungicide and a bactericide in a ratio between about 1:50 and 10:1 fungicide to bactericide. In particularly preferred embodiments the fungicide is present in the antimicrobial composition between about 200 ppm and about 5,000 ppm, and the bactericide is present in the composition between about 500 ppm and between about 10,000 ppm based on the weight of the leather goods.

The bactericide may be selected from the group consisting of triclosan, a biguanide, poly(oxyethylene-(dimethylimino)ethylene(dimethylimino) ethylenedichloride), isothiazolinone, and quaternary ammonium compounds. In preferred embodiments the bactericide is triclosan or polyhexamethylene biguanide. The scientific name for triclosan is chloro-2-(2,4- dichlorophenoxy)phenol and it is commercially available from a number of sources including the assignee of the present invention.

The fungicide may be selected from the group consisting of tolyldiiodomethylsulfone, zinc 2-pyridinethiol-1-oxide, propiconazole, thiabendazole, and tebuconazole. A preferred fungicide is tolyldiiodomethylsulfone. Tolyldiiodomethylsulfone is also commercially available and one source is Angus Chemical which sells it under the trade names Amical® Flowable and Amical® 48.

The leather goods are also soaked in an aqueous solution containing dyes and tanning agents as is usual in a tanning process. Suitable tanning agents include wattle, (wattle is a natural product from the Mimosaceae plant indigenous to Australia that is a soluble astringent complex phenolic), dicyanodiamide, and dyes. A typical synthetic tanning agent is a solution of a salt of a maleic acid styrene copolymer, which is used to improve the fullness and tightness of grain. This copolymer typically lowers the pH of the solution to a slightly acidic condition: approximately 6.4. The step of soaking the goods in a solution of dyes and tanning agents (hereinafter tanning agent solution) can occur prior to or after the first soaking in an antimicrobial agent. In trials used to test the effectiveness of the invention the step of soaking in the tanning agent solution occurred prior to the first soaking in antimicrobial agent. The leather is then rinsed at least once.

Tanning processes also include a step where the leather goods are "fatliquored". Fatliquoring is the process of introducing oil into the skin before the leather is dried to replace the natural oils lost earlier in the tanning process. Fatliquoring is usually performed in a drum with agitation using an oil emulsion at temperatures of about 50 °C to about 66 °C for anywhere between 30 minutes to several hours. This stepusually includes adding waterproofing agents to the "fat liquor". The fat liquor is then drained and the hide is rinsed with water. In some instances the fat liquor may include tanning agents.

It was surprisingly discovered during the development of the invention that the timing of the first soaking of the goods in the antimicrobial composition affects the take-up or the exhausting of the antimicrobial agents into the leather. The terms take-up and exhaustion are used here in a manner similar to their use in a dyeing context. In general these terms refer to the amount of the antimicrobial agent absorbed or drawn into the leather. In particular, it was discovered that the application of the first antimicrobial soaking either prior to or concurrent with the first soaking of the leather goods in fat liquors greatly enhances the uptake of the antimicrobial agents into the leather and thus improves the antimicrobial durability of the leather.

Following the rinsing of the initial fat liquor solution from the leather goods, additional soakings in tanning agent solutions and fat liquor solutions may be utilized. Any number of tanning agent soakings, antimicrobial agent soakings and fat liquor soakings may occur as long as the antimicrobial soakings occur prior to or concurrent with the fat liquor soakings. In particularly preferred embodiments the antimicrobial composition is applied concurrently with the fat liquors.

Regardless of whether the antimicrobial composition is applied prior to or concurrently with the fat liquor, the leather goods should be soaked in the antimicrobial composition for a time sufficient to exhaust an amount of antimicrobial agents sufficient to achieve a commercially acceptable level of efficacy. In preferred embodiments the leather goods are soaked for a time sufficient to exhaust about 1000 ppm of fungicide and about 1000 ppm of bactericide into the leather. This level of exhaustion can occur in one soaking or multiple soakings. At the end of the antimicrobial soaking step or steps the leather should have bactericide and fungicide dispersed substantially throughout the leather, including the interior portions of the leather.

After the fat liquor soakings the leather is finished in accordance with any of the known finishing procedures. After the leather is finished it may then be formed into any number of end products. Such products include but are not limited to clothing, shoes, boots, coats, baggage, clothing accessories, tents, outdoor equipment, and upholstery.

A general flow chart for the method according to the invention which includes process settings used during trials is set forth below.
1. Obtain hides and scour hides to remove fat using a solution of metal salts of acetic acid, carbonic acid, formic acid and sulfurous acid. Adjust the pH of the solution to around 7.0 with sodium bicarbonate. In trials the hides were scoured for about 30 minutes.
2. Drain and rinse with water at least once.
3. Add water and wetting agents. Let soak for about 10 minutes.
4. Add dyes and tanning agents and let soak for about 60 minutes at about 33 °C. In trials a quantity of maleic acid styrene copolymer, a tanning agent, was added which lowered the pH to about 6.4 during this soaking step.
5. Drain and rinse with water at about 55 °C at least once.
6. Add water and the fat liquor and the antimicrobial composition. Let the leather goods soak, preferably with agitation, for about 80 minutes at 55 °C. In trials the antimicrobial composition comprised about 2000 ppm triclosan based upon weight of goods and about 2500 ppm tolyldiiodomethylsulfone based upon weight of goods.
7. Add formic acid to the solution. Formic acid is a pickling agent that causes many of the more basic metal salts to attach to the formic acid. In trials the soaking in formic acid lasted about 60 minutes and the pH at this stage was about 3.9.
8. The formic acid solution is drained.
9. Water is added with an alkaline free chromic oxide solution. The leather is allowed to soak for about 60 minutes at about 33 °C.
10. The leather is then drained and rinsed with water at least once, preferably two or three times.
11. The leather is finished and formed into various end products.

More specific examples follow.

### Example 1

A leather hide containing 1100 ppm of chloro-2(2,4-dichlorophenoxy)phenol and 1000 ppm of tolyldiiodomethylsulfone was prepared as follows.

The blue hide leather is washed in water and then scoured in an aqueous solution of sodium sulfite (2% on weight of good "owg"), sodium acetate (1.75% owg), sodium formate (1.75% owg), and sodium bicarbonate (0.75% owg). To this is added a mixture of the sodium salt of oleoylsarcosine in water (0.30% owg), chloro-2-(2,4-dichlorophenoxy)phenol (0.11% owg) and tolyldiiodomethylsulfone (0.1% owg). After soaking for 30 minutes, a solution of a salt of a maleic acid styrene copolymer is added (2.0% owg) and the leather is soaked for another 30 minutes. Then approximately 4% owg of water proofing agent is added with an additional 45 minutes of soaking. The aqueous solution is drained off and then the hide is rinsed.

The hide is then soaked in an aqueous solution of water proofing agents for 45 minutes, drained and rinsed with fresh water. The leather is then soaked in Wattle, dicyanodiamide and black dyes. To this mixture is added 0.25% of the sodium salt of oleoylsarcosine in water. The hide is soaked for 60 minutes, drained and rinsed with fresh water.

To the rinse is added a second addition of the antimicrobial composition, which is a mixture of 0.11% owg of chloro-2-(2,4-dichlorophenoxy)phenol and 0.10% owg of tolyldiiodomethylsulfone. The hide is soaked for 20 minutes, and then another round of water proofing agents is added. To this solution is added 3.5% owg of formic acid, a pickling agent. The pH reading is about 3.9. After approximately 100 minutes, the solution is drained off and fresh water is added.

To the fresh water is added a chromic oxide cure, Chromitan® FM, a trademark of BASF, a lightly masked, alkaline free, basic chromium sulfate having a chromic oxide content of about 24% and a basicity of 40%. The chromic oxide breaks up the emulsifier of the water proofing agents making them permanent.

The resulting leather was then tested in accordance AATCC Test Method 147-1993, which quantifies the bactericidal efficacy against *S*. *aureus* and *K. pneumoniae,* and AATCC Test Method 30-1993, Part III which quantifies the fungicidal efficacy against *Aspergillus niger.* Results are shown in Tables 1 and 2.

### Example 1b

Samples from Example 1 were laundered with an Atlas Laundrometer based on AATCC Test Method 61-2A. The samples were tested for anti-fungal efficacy according to AATCC Test Method 30-1993. The results of this test are shown in Table 2.

### Example 2

A leather hide containing 4000 ppm (0.40% owg) of chloro-2-(2,4-dichlorophenoxy)phenol and 2000 ppm (0.20% owg) of tolyldiiodomethylsulfone was prepared and tested following the general procedure outlined in Example 1. These hides were tested in accordance with AATCC Test Methods 147 and 30. The results are shown in Tables 1 and 2.

### Example 3

A leather hide containing 2500 ppm of poly(oxyethylene-(dimethylimino)-ethylene(dimethylimino)ethylenedichloride) and 2000 ppm of zinc 2-pyridinethiol-1-oxide was prepared and tested following the general procedure outlined in Example 1. These hides were tested in accordance with AATCC Test Methods 147 and 30. The results are shown in Tables 1 and 2.

Duplicate samples were run under AATCC Test Method 30, Part III which is why the samples in Table 2 are listed as #1 and #2.

**Table 1**

| Test Method: AATCC Test Method 147-193 | | | |
|---|---|---|---|
| Sample | Organism | Growth Descriptor | Zone of Inhibition (mm) |
| Example 1 | *S. aureus* | 0 | 6 |
| Example 1 | *K. pneumoniae* | 0 | 8 |
| | | | |
| Example 2 | *S. aureus* | 0 | 5 |
| Example 2 | *K. pneumoniae* | 0 | 8 |
| | | | |
| Example 3 | *S. aureus* | 0 | 17 |
| Example 3 | *K. pneumoniae* | 0 | 17 |

**Table 2**

| Test Method: AATCC Test Method 30-1993, Part III | | | |
|---|---|---|---|
| Sample | Organism | Growth Descriptor | Zone of Inhibition (mm) |
| Example 1 (#1) | *A. niger* | 0 | - |
| Example 1 (#2) | *A. niger* | 0 | - |
| | | | |
| Example 1b (#1) | *A. niger* | 0 | 9 |
| Example 1b (#2) | *A. niger* | 0 | 9 |
| | | | |
| Example 2 (#1) | *A. niger* | 0 | 1 |
| Example 2 (#2) | *A. niger* | 0 | - |
| | | | |
| Example 3 (#1) | *A. niger* | 0 | - |
| Example 3 (#2) | *A. niger* | 0 | - |

| | | | |
|---|---|---|---|
| Interpretation of Results 0 = no growth 1 = microscopic growth (visible under microscope) 2 = macroscopic growth (visible to naked eye) | | | |

Additional testing was conducted to further test the antimicrobial efficacy of leathers produced according to the invention. Various leathers were tested in accordance with AATCC Test Method 30 Part III and Kirby Bauer protocols. The leathers were tested as initially treated and after five (5) washings. As the results show, in all instances acceptable efficacy was demonstrated. In fact, zones of inhibition were demonstrated with samples that had been washed five times.

**Table 3**

| Test Method: AATCC Test Method 30 Part III Sample: 1.5 inch x 1.5 inch square of leather | | | |
|---|---|---|---|
| Sample | Organism | Growth Descriptor | Zone of Inhibition (mm) |
| | | | |
| Leather #1 | *A. niger* | 0 | - |
| Leather #1 | *T. mentagrophytes* | 0 | 18 |
| | | | |
| Leather #2 | *A. niger* | 0 | 5 |
| Leather #2 | *T. mentagrophytes* | 0 | 8 |
| | | | |
| Leather #3 | *A. niger* | 0 | - |
| Leather #3 | *T. mentagrophytes* | 0 | 16 |
| | | | |
| Leather #4 | *A. niger* | 0 | - |
| Leather #4 | *T. mentagrophytes* | 0 | 14 |
| | | | |
| Leather #5 | *A. niger* | 0 | 7 |
| Leather #5 | *T. mentagrophytes* | 0 | 13 |
| | | | |
| Leather #1 (wash5x) | *A. niger* | 0 | - |
| Leather #1 (wash 5x) | *T. mentagrophytes* | 0 | 8 |
| | | | |
| Leather #2 (wash 5x) | *A. niger* | 0 | - |
| Leather #2 (wash 5x) | *T. mentagrophytes* | 0 | 11 |
| | | | |
| Leather #3 (wash 5x) | *A. niger* | 0 | - |
| Leather #3 (wash 5x) | *T. mentagrophytes* | 0 | 13 |

| | | | |
|---|---|---|---|
| Interpretation of Results 0 = no growth 1 = microscopic growth (visible under microscope) 2 = macroscopic growth (visible to naked eye) | | | |

**Table 4**

| Test Method: Kirby Bauer Sample: 1 inch x 1 inch square of leather | | | |
|---|---|---|---|
| Sample | Organism | Results | Zone of Inhibition (mm) |
| | | | |
| Leather #1 | *E. coli* | NZ/I | - |
| Leather #1 | *S. aureus* | I | 3 |
| | | | |
| Leather #2 | *E. coli* | NZ/I | - |
| Leather #2 | *S*. *aureus* | I | 4 |
| | | | |
| Leather #3 | *E. coli* | NZ/I | - |
| Leather #3 | *S. aureus* | I | 3 |
| | | | |
| Leather #4 | *E. coli* | I | 6 |
| Leather #4 | *S. aureus* | I | 8 |
| | | | |
| Leather #5 | *E. coli* | I | 3 |
| Leather #5 | *S. aureus* | I | 6 |
| | | | |
| Leather #6 | *E. coli* | NZ/I | - |
| Leather #6 | *S*. *aureus* | I | 3 |
| | | | |
| Leather #1 (wash 5x) | *E. coli* | NZ/I | - |
| Leather #1 (wash 5x) | *S. aureus* | I | 1 |
| | | | |
| Leather #2 (wash 5x) | *E. coli* | NZ/I | - |
| Leather #2 (wash 5x) | *S. aureus* | I | 1 |
| | | | |
| Leather #3 (wash 5x) | *E. coli* | NZ/I | - |
| Leather #3 (wash 5x) | *S. aureus* | NZ/I | - |
| | | | |
| Leather #4 (wash 5x) | *E. coli* | I | 5 |
| Leather #4 (wash 5x) | *S. aureus* | I | 8 |
| | | | |
| Leather #5 (wash 5x) | *E. coli* | NZ/I | - |
| Leather #5 (wash 5x) | *S. aureus* | I | 4 |
| | | | |
| Leather #6 (wash 5x) | *E. coli* | NZ/I | - |
| Leather #6 (wash 5x) | *S. aureus* | I | 1 |

| | | | |
|---|---|---|---|
| Interpretation of Results I = Inhibition of growth NZ = No zone of inhibition surrounding the sample NZ/I = No zone of inhibition but growth was inhibited NI = No inhibition of growth under the sample (if observable) | | | |

## Claims

1. A method for aqueous treatment of leather to impart durable antimicrobial characteristics, the method comprising the steps of:
cleaning the leather,
a first soaking of the leather in an antimicrobial compositions optionally in the presence of a lipophilic emulsifier wherein the antimicrobial compositions comprises a bactericide and a fungicide and wherein the fungicide and bactericide are present in the composition in a ratio between 1:50 to 10:1 fungicide to bactericide,
soaking the leather in an aqueous solution containing a tanning agent, and rinsing the leather.

2. A method according to claim 2 further comprising a first soaking of the leather in fat liquors and wherein the first soaking of the leather in an antimicrobial composition occurs prior to or concurrent with the first soaking of the leather in fat liquors.

3. A method according to claim 2 further comprising a second soaking of the leather in fat liquors and a second soaking of the leather in an antimicrobial compositions wherein said second soaking of the leather in an antimicrobial composition occurs prior to or concurrent with the second soaking of the leather in fat liquors.

4. A method according to claim 3 further comprising the step of rinsing the leather between the first soaking in fat liquors and the second soaking in fat liquors.

5. A method according to claim 2 wherein the step of soaking the leather in a solution of tanning agent occurs prior to the first soaking of the leather in an antimicrobial composition.

6. A method according to claim 2 wherein the step of soaking the leather in a solution of tanning agent occurs after the first soaking of the leather in an antimicrobial composition.

7. A method according to claim 1 wherein the fungicide is present in the antimicrobial composition between 200 ppm and 5,000 ppm, and the bactericide is present in the composition between 500 ppm and 10,000 ppm.

8. A method according to claim 1 wherein the bactericide is selected from the group consisting of triclosan, a biguanide, poly(oxyethylene-(dimethylimino)ethylene(dimethylimino)ethylenedichloride), isothiazolinone, and quaternary ammonium compounds.

9. A method according to claim 8 wherein the bactericide is triclosan.

10. A method according to claim 8 wherein the bactericide is polyhexa-methylene biguanide.

11. A method according to claim 1 wherein the fungicide is selected from the group consisting of tolyldiiodomethylsulfone, zinc 2-pyridinethiol-1-oxide, propiconazole, thiabendazole, and tebuconazole.

12. A method according to claim 11 wherein said fungicide is tolyldiiodomethylsulfone.

13. A method according to claim 2 wherein the step of first soaking of said leather in said antimicrobial composition comprises exhausting said fungicide and bactericide into the interior of said leather.

14. A method according to claim 1 wherein said leather is soaked in said antimicrobial composition for a time sufficient to exhaust at least 1000 ppm of said fungicide and at least 1000 ppm of said bactericide into said leather.

15. A method according to claim 14 wherein said bactericide is triclosan and said fungicide is tolyldiiodomethylsulfone.

16. A method according to any one of the preceding claims, wherein the first soaking takes place in the presence of said emulsifier.

17. A method according to claim 1 further comprising the step of finishing the leather.

18. A method according to claim 17 further comprising forming products from said leather.

19. A method according to claim 18 wherein said products include clothing, shoes, boots, coats, baggage, clothing accessories, tents, outdoor equipment, and upholstery.

## Patentansprüche

1. Verfahren zur wässrigen Behandlung von Leder, um dauerhafte antimikrobielle Eigenschaften zu verleihen, wobei das Verfahren die Schritte umfasst:
Reinigen des Leders,
ein erstes Tränken des Leders in einer antimikrobiellen Zusammensetzung gegebenenfalls in Gegenwart eines lipophilen Emulgators, wobei die antimikrobiolle Zusammensetzung ein Bakterizid und ein Fungizid umfasst und wobei das Fungizid und Bakterizid in der Zusammensetzung in einem Verhältnis zwischen 1:50 bis 10:1 Fungizid zu Bakterizid vorliegen,
Tränken des Leders in einer wässrigen Lösung, die einen Gerbstoff enthält und Spülen des Leders.

2. Verfahren nach Anspruch 2, weiter umfassend ein erstes Tränken des Leders in Fettschmieren und wobei das erste Tränken des Leders in einer antimikrobiellen Zusammensetzung vor oder gleichzeitig mit dem ersten Tränken des Leders in Fettschmieren stattfindet.

3. Verfahren nach Anspruch 2, weiter umfassend ein zweites Tränken des Leders in Fettschmieren und ein zweites Tränken des Leders in einer antimikrobiellen Zusammensetzung, wobei das zweite Tränken des Leders in einer antimikrobiellen Zusammensetzung vor oder gleichzeitig mit dem zweiten Tränken des Leders in Fettschmieren stattfindet.

4. Verfahren nach Anspruch 3, weiter umfassend den Schritt Spülen des Leders zwischen dem ersten Tränken in Fettschmieren und dem zweiten Tränken in Fettschmieren.

5. Verfahren nach Anspruch 2, wobei der Schritt Tränken des Leders in einer Lösung von Gerbstoff vor dem ersten Tränken des Leders in einer antimikrobiellen Zusammensetzung stattfindet.

6. Verfahren nach Anspruch 2, wobei der Schritt Tränken des Leders in einer Lösung von Gerbstoff nach dem ersten Tränken des Leders in einer antimikrobiellen Zusammensetzung stattfindet.

7. Verfahren nach Anspruch 1, wobei das Fungizid in der antimikrobiellen Zusammensetzung zwischen 200 ppm und 5000 ppm vorliegt und das Bakterizid in der Zusammensetzung zwischen 500 ppm und 10000 ppm vorliegt.

8. Verfahren nach Anspruch 1, wobei das Bakterizid ausgewählt ist aus der Gruppe bestehend aus Triclosan, einem Biguanid, Poly(oxyethylen-(dimethylimino)ethylen(dimethylimino)ethylendichlorid), Isothiazolinon und quartären Ammonium-Verbindungen.

9. Verfahren nach Anspruch 8, wobei das Bakterizid Triclosan ist.

10. Verfahren nach Anspruch 8, wobei das Bakterizid Polyhexa-methylenbiguanid ist.

11. Verfahren nach Anspruch 1, wobei das Fungizid ausgewählt ist aus der Gruppe bestehend aus Tolyldiiodmethylsulfon, Zink-2-pyridinthiol-1-oxid, Propiconazol, Thiabendazol und Tebuconazol.

12. Verfahren nach Anspruch 11, wobei das Fungizid Tolyldiiodmethylsulfon ist.

13. Verfahren nach Anspruch 2, wobei der Schritt erstes Tränken des Leders in der antimikrobiellen Zusammensetzung Ablassen des Fungizids und Bakterizids in das Innere des Leders umfasst.

14. Verfahren nach Anspruch 1, wobei das Leder in der antimikrobiellen Zusammensetzung für eine Zeit getränkt wird, die ausreicht, um mindestens 1000 ppm des Fungizids und mindestens 1000 ppm des Bakterizids in das Leder abzulassen.

15. Verfahren nach Anspruch 14, wobei das Bakterizid Triclosan ist und das Fungizid Tolyldiiodmethylsulfon ist.

16. Verfahren nach einem der vorhergehenden Ansprüche, wobei das erste Tränken in Gegenwart des Emulgators stattfindet.

17. Verfahren nach Anspruch 1, weiter umfassend den Schritt Fertigstellen des Leders.

18. Verfahren nach Anspruch 17, weiter umfassend Bilden von Produkten aus dem Leder.

19. Verfahren nach Anspruch 18, wobei die Produkte Bekleidung, Schuhe, Stiefel, Jacken, Gepäck, Bekleidungszubehör, Zelte, Outdoor-Equipment und Polstermöbel umfassen.

## Revendications

1. Procédé de traitement aqueux du cuir pour lui conférer des caractéristiques antimicrobiennes durables, le procédé comprenant les étapes suivantes :
nettoyage du cuir,
premier trempage du cuir dans une composition antimicrobienne éventuellement en présence d'un émulsifiant lipophile, la composition antimicrobienne comprenant un bactéricide et un fongicide et le fongicide et le bactéricide étant présents dans la composition dans un rapport du fongicide au bactéricide de 1:50 à 10:1,
trempage du cuir dans une solution aqueuse contenant un agent de tannage, et rinçage du cuir.

2. Procédé selon la revendication 1 comprenant, en outre, un premier trempage du cuir dans des liqueurs grasses, le premier trempage du cuir dans une composition antimicrobienne étant antérieur ou concurrent au premier trempage du cuir dans des liqueurs grasses.

3. Procédé selon la revendication 2 comprenant, en outre, un second trempage du cuir dans des liqueurs grasses et un second trempage du cuir dans une composition antimicrobienne, ledit second trempage du cuir dans une composition antimicrobienne étant antérieur ou concurrent au second trempage du cuir dans des liqueurs grasses.

4. Procédé selon la revendication 3 comprenant, en outre, l'étape de rinçage du cuir entre le premier trempage dans des liqueurs grasses et le second trempage dans des liqueurs grasses.

5. Procédé selon la revendication 2, dans lequel l'étape de trempage du cuir dans une solution d'agent de tannage est antérieure au premier trempage du cuir dans une composition antimicrobienne.

6. Procédé selon la revendication 2, dans lequel l'étape de trempage du cuir dans une solution d'agent de tannage est postérieure au premier trempage du cuir dans une composition antimicrobienne.

7. Procédé selon la revendication 1, dans lequel le fongicide est présent dans la composition antimicrobienne en une quantité entre 200 et 5000 ppm, et le bactéricide est présent dans la composition en une quantité entre 500 et 10 000 ppm.

8. Procédé selon la revendication 1, dans lequel le bactéricide est choisi dans le groupe constitué par le triclosan, un biguanide, le dichlorure de polyoxyéthylène-(diméthylimino)éthylène(diméthylimino)éthylène, l'isothiazolinone, et les composés d'ammonium quaternaires.

9. Procédé selon la revendication 8, dans lequel le bactéricide est le triclosan.

10. Procédé selon la revendication 8, dans lequel le bactéricide est un biguanide de polyhexaméthylène.

11. Procédé selon la revendication 1, dans lequel le fongicide est choisi dans le groupe constitué par la tolyldiiodométhylsulfone, le 2-pyridinethiol-oxyde de zinc, le propioconazole, le thiabendazole, et le tébuconazole.

12. Procédé selon la revendication 11, dans lequel ledit fongicide est la tolyldiiodométhylsulfone.

13. Procédé selon la revendication 2, dans lequel l'étape de premier trempage dudit cuir dans ladite composition antimicrobienne comprend l'épuisement desdits fongicide et bactéricide à l'intérieur dudit cuir.

14. Procédé selon la revendication 1, dans lequel ledit cuir est mis à tremper dans ladite composition antimicrobienne pendant un temps suffisant pour épuiser au moins 1000 ppm dudit fongicide et au moins 1000 ppm dudit bactéricide dans ledit cuir.

15. Procédé selon la revendication 14, dans lequel ledit bactéricide est le triclosan et ledit fongicide est la tolyldiiodométhylsulfone.

16. Procédé selon l'une quelconque des revendications précédentes, dans lequel le premier trempage s'effectue en présence dudit émulsifiant.

17. Procédé selon la revendication 1 comprenant, en outre, l'étape de finition du cuir.

18. Procédé selon la revendication 17 comprenant, en outre, la formation de produits à partir dudit cuir.

19. Procédé selon la revendication 18, dans lequel lesdits produits comprennent les vêtements, les chaussures, les bottes, les manteaux, les bagages, les accessoires vestimentaires, les tentes, l'équipement pour l'extérieur, et la tapisserie.
